# EUROPÄISCHE PATENTSCHRIFT

(11) **EP 1 671 114 B1**
(45) Veröffentlichungstag und Bekanntmachung des Hinweises auf die Patenterteilung: **21.10.2009**
(21) Anmeldenummer: 04766471.9
(22) Anmeldetag: 11.08.2004
(51) Int. Cl.: G01N 27/407, G01N 27/417

(54) **SENSORELEMENT ZUR BESTIMMUNG DER SAUERSTROFFKONZENTRATION EINES ABGASES EINER BRENNKRAFTMASCHINE UND VERFAHREN ZU DESSEN HERSTELLUNG**
SENSOR ELEMENT FOR DETERMINING THE CONCENTRATION OF OXYGEN IN AN EXHAUST GAS OF A COMBUSTION ENGINE AND METHOD FOR THE PRODUCTION THEREOF
ELEMENT DE DETECTION POUR DETERMINER LA CONCENTRATION EN OXYGENE DE GAZ D'ECHAPPEMENT D'UN MOTEUR A COMBUSTION INTERNE ET PROCEDE DE PRODUCTION CORRESPONDANT

(30) Priorität: 29.09.2003 DE 10345141
(43) Veröffentlichungstag der Anmeldung: 21.06.2006
(73) Patentinhaber: ROBERT BOSCH GMBH, 70442 Stuttgart (DE)
(72) Erfinder: WAHL, Bjoern, 75172 Pforzheim (DE); GUENSCHEL, Harald, 96161 Gerach (DE); FICKER, Berthold, 96050 Bamberg (DE)
(86) Internationale Anmeldenummer: PCT/EP2004/051768
(87) Internationale Veröffentlichungsnummer: WO 2005/033691

(56) Entgegenhaltungen:
- DE-A- 19 817 012
- US-A- 5 321 971
- US-A- 5 507 937
- US-A- 5 653 858
- US-A1- 2003 116 433

## Beschreibung

### Stand der Technik

Die Erfindung geht aus von einem Sensorelement und von einem Verfahren zur Herstellung des Sensorelements nach dem Oberbegriff des jeweiligen unabhängigen Anspruchs.

Ein derartiges Sensorelement und ein Verfahren zur Herstellung des Sensorelements ist beispielsweise aus der DE 198 17 012 A1 bekannt. Das Sensorelement weist zwischen einer ersten und einer zweiten Festelektrolytfolie eine ringförmige Diffusionsbarriere auf, die von einem ringförmigen Messgasraum umgeben ist. Im Messgasraum sind Elektroden angeordnet, zu denen ein außerhalb des Sensorelements befindliches Messgas über eine in der ersten Festelektrolytfolie eingebrachte Gaszutrittsöffnung und die Diffusionsbarriere gelangen kann.

Weiterhin sind Sensorelemente bekannt, bei denen der Gaszutritt durch in der Schichtebene zwischen der ersten und der zweiten Festelektrolytfolie angeordnete Öffnungen erfolgt.

Zum Ausgleich von fertigungsbedingten Schwankungen des Diffusionswiderstands der Diffusionsbarriere wird der Durchmesser des Gaszutrittslochs und damit der Innendurchmesser der Diffusionsbarriere gezielt verändert. Hierzu wird zunächst ein Sensorelement aus einer Charge gesintert und der sogenannte Grenzstrom (Pumpstrom) dieses Sensorelements ermittelt, und anhand des Messergebnisses der gewünschte Innendurchmesser der Diffusionsbarriere ermittelt und bei den weiteren aus derselben Charge stammenden Sensorelementen der ermittelte Innendurchmesser durch Bohren eingestellt.

Hierbei ist nachteilig, dass das Verfahren zum Ermitteln des Grenzstroms am gesinterten Sensorelement und das nachgeschaltete Anpassen des Innendurchmessers der Diffusionsbarriere und der Gaszutrittsöffnung zeitaufwendig und kostenintensiv ist. Weiterhin ist nachteilig, dass selbst nach der oben beschriebenen Korrektur fertigungsbedingter Schwankungen des Diffusionswiderstandes der Grenzstrom innerhalb kann, da innerhalb einer Charge die Höhe der Diffusionsbarriere einer Streuung unterliegen kann.

### Vorteile der Erfindung

Das erfindungsgemäße Sensorelement und das Verfahren zur Herstellung des erfindungsgemäßen Sensorelements mit den kennzeichnende Merkmalen des jeweiligen unabhängigen Anspruchs hat demgegenüber den Vorteil, dass die Diffusionsbarriere nach dem Sintern auf einfache, zeitsparende und kostengünstige Weise mit hoher Genauigkeit bearbeitet werden kann, um fertigungstechnisch bedingte Schwankungen des Diffusionswiderstands auszugleichen.

Hierzu ist die Diffusionsbarriere, die zwischen einer ersten und einer zweiten Festelektrolytfolie angeordnet ist, auf ihrer einen dem Messgas zugewandten Seite mit einer Abdeckschicht überzogen. Die Abdeckschicht ist gasundurchlässig oder zumindest weitgehend gasundurchlässig. Damit kann die Diffusionsbarriere und/oder die Abdeckschicht durch eine Gaszutrittsöffnung hindurch, die in die erste Festelektrolytfolie eingebracht ist, bearbeitet werden und so am gesinterten Sensorelement der Diffusionswiderstand der Diffusionsbarriere eingestellt werden.

Weiterhin ist ein Verfahren vorteilhaft, bei dem die Diffusionsbarriere innerhalb des gesinterten Sensorelements durch einen Laser abgetragen wird. Hierbei ist vorteilhaft, dass während des Abtrags der Diffusionsbarriere durch den Laser der Diffusionswiderstand der Diffusionsbarriere gemessen werden kann, indem der Grenzstrom einer elektrochemischen Zelle des Sensorelements ermittelt wird.

Unter einer weitgehend gasundurchlässigen Abdeckschicht ist im Sinne dieser Schrift eine Abdeckschicht zu verstehen, bei der die Menge des durch die Abdeckschicht strömenden Messgases höchstens 10 Prozent der Menge des insgesamt durch die Diffusionsbarriere strömenden Messgases entspricht.

Durch die in den abhängigen Ansprüchen aufgeführten Maßnahmen sind vorteilhafte Weiterbildungen des in den unabhängigen Ansprüchen genannten Sensorelements und des Verfahrens zur Herstellung des Sensorelements möglich.

Vorzugsweise weist die Abdeckschicht eine Aussparung auf, durch die das Messgas über die Diffusionsbarriere zur Elektrode gelangen kann, wobei die Aussparung bei einer zylindrischen oder hohlzylindrischen Diffusionsbarriere mittig auf der Diffusionsbarriere angeordnet ist, also beispielsweise als kreisförmige Aussparung, deren Mittelpunkt auf der Symmetrieachse der Diffusionsbarriere liegt. Dadurch ist gewährleistet, dass der Diffusionsweg des Messgases zu allen Bereichen der Elektrode weitgehend gleich ist. Hierzu ist weiterhin bevorzugt die von der Abdeckschicht bedeckte Fläche der Diffusionsbarriere parallel zu einer Schichtebene des Sensorelements angeordnet, und in die erste Festelektrolytfolie ist eine Aussparung (Gaszutrittsöffnung) vorgesehen, wobei die Abdeckschicht auf der an die Gaszutrittsöffnung angrenzende Seite der Diffusionsbarriere angeordnet ist.

Bevorzugt sind die Gaszutrittsöffnung zylindrisch und die Diffusionsbarriere hohlzylindrisch geformt. Die Abdeckschicht ist ringförmig gestaltet und weist eine kreisförmige Aussparung auf. Die jeweiligen Mittelpunkte beziehungsweise Mittelachsen liegen übereinander. Der Durchmesser d₁ der Gaszutrittsöffnung, der Innendurchmesser d₂ der Diffusionsbarriere, der Außendurchmesser d₃ der Diffusionsbarriere und der Durchmesser d₄ der kreisförmigen Aussparungen genügen vorteilhaft der Beziehung
d₄ < d₁ < d₃. Besonders vorteilhaft liegt d₁ im Bereich von 0,6 mm bis 1,8 mm und/oder d₂ im Bereich von 0,2 mm bis 0,6 mm und/oder d₃ im Bereich von 1,8 mm bis 3,0 mm und/oder d₄ im Bereich von 0,2 mm bis 0,6 mm.

Bei einer bevorzugten Ausführungsform ist die Beziehung d₂ ≤ d₄ < d₁ erfüllt. Bei dieser Ausführungsform erfolgt der Gaszutritt sowohl über den Innenradius der Diffusionsbarriere als auch über den von der Abdeckschicht nicht bedeckten Bereich der Diffusionsbarriere. Dadurch hat ein Teil des Abgases eine kürzere Diffusionsstrecke, und der Diffusionsstrom durch die Diffusionsbarriere erhöht sich.

Bei einer weiteren bevorzugten Ausführungsform ist d₄ ≤ d₂, so dass die Abdeckschicht über den Innenradius der Diffusionsbarriere übersteht und damit die Diffusionsbarriere vor der Ablagerung schädlicher Bestandteile des Abgases schützt. Bevorzugt ist die Schichtdicke der Abdeckschicht mindestens so groß wie die Schichtdicke der Diffusionsbarriere, so dass die mechanische Stabilität des überstehenden Bereichs der Abdeckschicht gewährleistet ist.

Alternativ zu der hohlzylinderförmigen Geometrie kann für Gaszutrittsöffnung, Diffusionsbarriere und Messgasraum auch eine lineare Geometrie vorgesehen sein, bei der die Diffusionsbarriere und der Messgasraum hintereinander angeordnet sind und ungefähr die gleiche Breite und (unter Einbeziehung der Abdeckschicht) gleiche Höhe aufweisen. Die Gaszutrittsöffnung ist beispielsweise als Spalt in die erste Festelektrolytfolie eingebracht, wobei die Breite des Spaltes der Breite der Diffusionsbarriere entspricht.

Bei einer alternativen Ausführung ist zwischen der Abdeckschicht und der ersten Festelektrolytfolie eine weitere Diffusionsbarriere angeordnet. Das Messgas oder eine Komponente des Messgases kann somit zu den Elektroden über die Aussparung in der Abdeckschicht und die Diffusionsbarriere oder direkt über die weitere Diffusionsbarriere gelangen. Das durch die weitere Diffusionsbarriere diffundierende Messgas strömt nicht durch die Aussparung in der Abdeckschicht. Der Diffusionswiderstand setzt sich damit zusammen aus einer Komponente der weiteren Diffusionsbarriere und aus einer Komponente der Aussparung in der Abdeckschicht und der Diffusionsbarriere. Durch die Aufteilung des Diffusionsstroms in zwei Zweige wird der Abgleich des Diffusionswiderstands vereinfacht, da nicht der gesamte Diffusionsstrom durch die Aussparung der Abdeckschicht erfolgt. Vorteilhaft ist der Innendurchmesser der weiteren Diffusionsbarriere größer als der Innendurchmesser der Gaszutrittsöffnung.

Bevorzugt wird die Diffusionsbarriere durch die Gaszutrittsöffnung mittels eines Lasers abgetragen. Vor dem Abtrag ist auch die Gaszutrittsöffnung zumindest bereichsweise mit der Diffusionsbarriere gefüllt. Dies vereinfacht die Zugänglichkeit für den Laser und vergrößert das Volumen, das durch den Laser abgetragen werden kann.

Bei einem alternativen Verfahren zum Abgleich des Diffusionswiderstands der Diffusionsbarriere werden die Abdeckschicht und/oder die "Diffusionsbarriere durch einen Laser durch die Gaszutrittsöffnung hindurch abgetragen. Der Abtrag erfolgt am gesinterten Sensorelement, also nach dem Sinterprozess.

Bevorzugt wird während des Abtrags der Diffusionsbarriere der Grenzstrom ermittelt und aufgrund des ermittelten Grenzstroms der Abtrag kontrolliert. Hierzu wird eine elektrochemische Zelle des Sensorelements mit einer Spannung beaufschlagt, wobei eine der Elektroden der elektrochemischen Zelle in Diffusionsrichtung hinter der Diffusionsbarriere angeordnet ist Die Spannung ist so hoch, dass der gesamte durch die Diffusionsbarriere strömende Sauerstoff durch die elektrochemische Zelle von der hinter der Diffusionsbarriere liegenden Elektrode abgepumpt wird (Grenzstrom). Der Abtrag wird solange fortgesetzt, bis ein Sollwert für den Grenzstrom erreicht wird. Die Grenzstrommessung kann auch vor und/oder nach dem Abtrag der Diffusionsbarriere erfolgen, oder der Abtrag kann während der Bestimmung des Grenzstroms unterbrochen werden.

Bevorzugt wird der durch den Abtrag der Diffusionsbarriere entstehenden Abbrand mittels eines Gasstroms entfernt, der durch eine Injektionsdüse auf die Diffusionsbarriere oder auf den entsprechenden Bereich der Diffusionsbarriere gelenkt wird. Um den zu bestimmenden Grenzstrom nicht zu verfälschen, hat der Gasstrom einen definierten Sauerstoffpartialdruck, bevorzugt den Sauerstoffpartialdruck von Luft, und wird auf eine Temperatur von ungefähr 750 Grad Celsius erhitzt.

### Zeichnung

Ausführungsbeispiele der Erfindung sind in der Zeichnung dargestellt und in der nachfolgenden Beschreibung näher erläutert

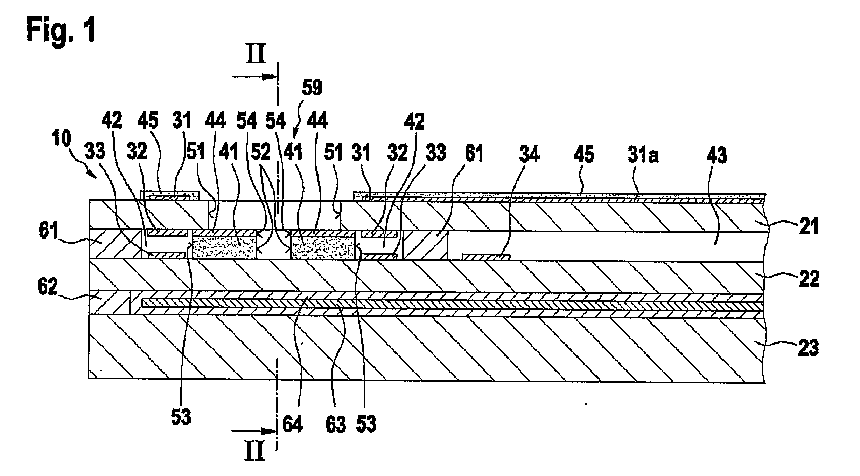

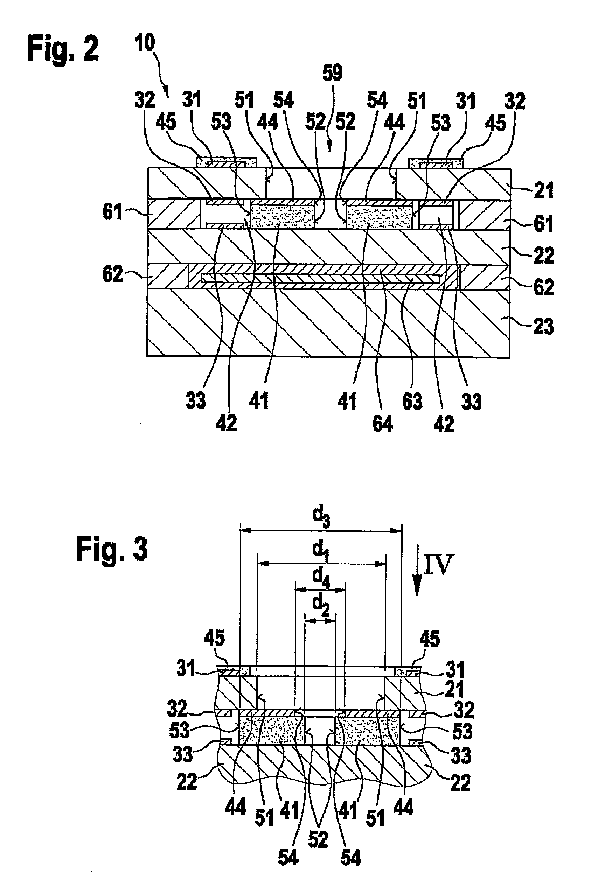

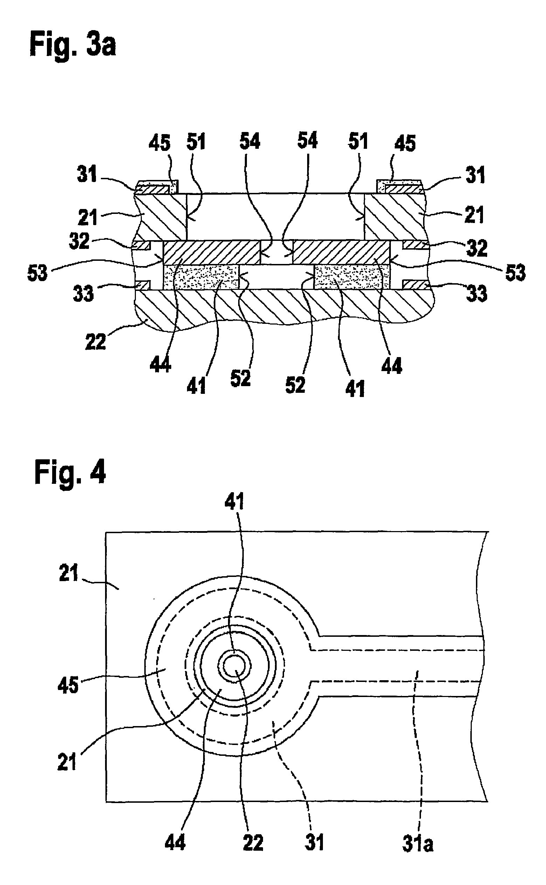

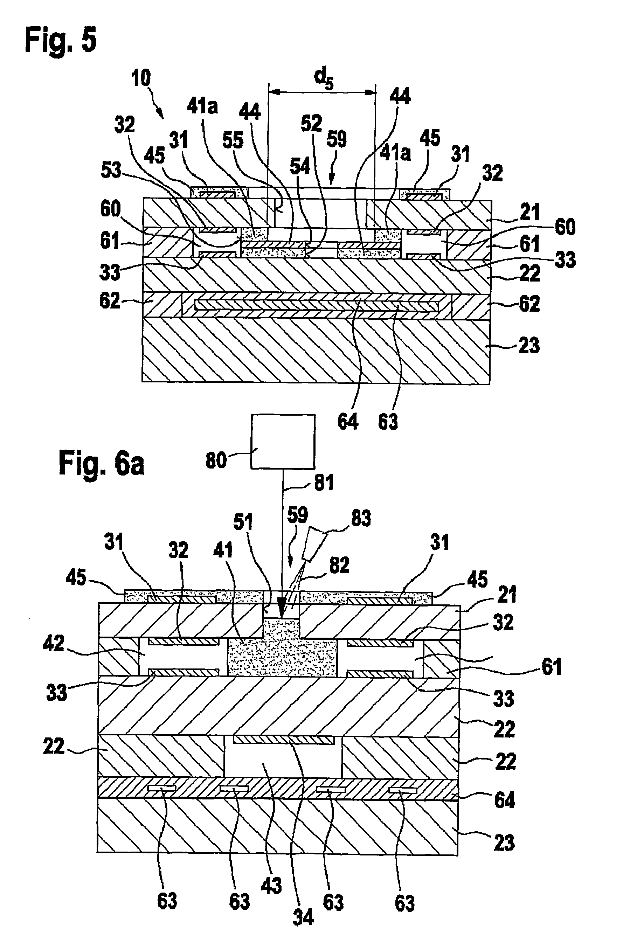

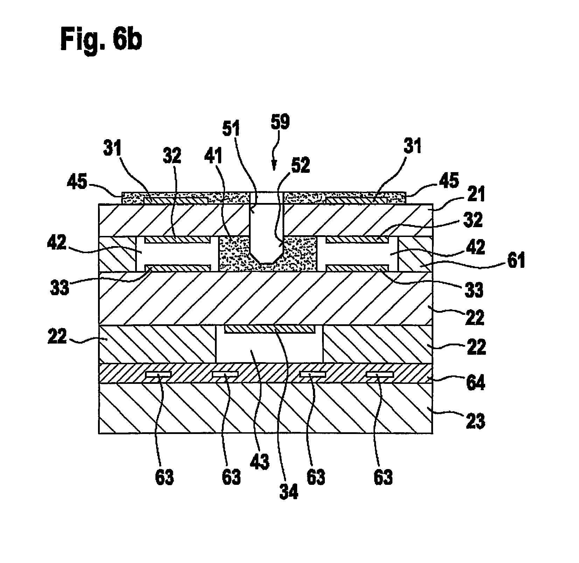

Es zeigen die Figur 1 einen Längsschnitt durch ein erstes Ausführungsbeispiel der Erfindung, Figur 2 einen Schnitt durch das erste Ausführungsbeispiel der Erfindung gemäß der Linie II - II in Figur 1, Figur 3 ein Ausschnitt eines Schnitts durch ein zweites Ausführungsbeispiel der Erfindung, Figur 3a einen Ausschnitt eines Schnittes durch eine weitere Ausführungsform der Erfindung, Figur 4 eine Aufsicht auf das zweite Ausführungsbeispiel der Erfindung in der in Figur 3 angegebenen Richtung, Figur 5 ein drittes Ausführungsbeispiel der Erfindung in Schnittdarstellung, und die Figuren 6a und 6b ein viertes Ausführungsbeispiel der Erfindung vor und nach dem Abtragen eines Bereichs der Diffusionsbarriere mit einem Laser.

### Beschreibung der Ausführungsbeispiele

Die Figuren 1 und 2 zeigen als erstes Ausführungsbeispiel der Erfindung ein Sensorelement 10 mit einer ersten, einer zweiten und einer dritten Festelektrolytfolie 21, 22, 23. Auf der Außenseite der ersten Festelektrolytfolie 21 ist eine ringförmige erste Elektrode 31 angeordnet, an die sich eine Zuleitung 31a zur ersten Elektrode 31 anschließt. Die erste Elektrode 31 ist mit einer porösen Schutzschicht 45 abgedeckt.

In die erste Festelektrolytfolie 21 ist innerhalb der Öffnung der ersten Elektrode 31 eine Gaszutrittsöffnung 59 mit einer ersten Mantelfläche 51 eingebracht, die einen Durchmesser d₁ aufweist.

Zwischen der ersten und der zweiten Festelektrolytfolie 21, 22 ist eine hohlzylinderförmige Diffusionsbarriere 41 angeordnet. Die Diffusionsbarriere 41 weist eine innere Mantelfläche 52 mit einem Durchmesser d₂ und eine äußere Mantelfläche 53 mit einem Durchmesser d₃ auf. Die äußere Mantelfläche 53 der Diffusionsbarriere 41 wird von einem ebenfalls hohlzylinderförmigen Messgasraum 42 umgeben.

Weiterhin ist zwischen der ersten und der zweiten Festelektrolytfolie 21, 22 ein Referenzgasraum 43 angeordnet, der sich ausgehend vom Messgasraum 42 in Längsrichtung des Sensorelements 10 erstreckt und mit einem keramischen Material geringer Porosität gefüllt ist. Zwischen dem Messgasraum 42 und dem Referenzgasraum 43 ist ein Dichtrahmen 61 angeordnet. Der Dichtrahmen 61 umgibt den Messgasraum 42 vollständig und dichtet ihn nach außen hin ab.

Im Messgasraum 42 ist auf der ersten Festelektrolytfolie 21 eine ringförmige zweite Elektrode 32 angeordnet. Der zweiten Elektrode 32 gegenüberliegend ist im Messgasraum 42 auf der zweiten Festelektrolytfolie 22 eine ringförmige dritte Elektrode 33 vorgesehen. Im Referenzgasraum 43 ist eine vierte Elektrode 34 angeordnet, die einem Referenzgas ausgesetzt ist. Der Referenzgasraum kann auch durch die Poren einer porös ausgestalteten vierten Elektrode beziehungsweise deren Zuleitung oder durch eine poröse keramische Schicht gebildet werden.

Zwischen der zweiten und der dritten Festelektrolytfolie 22, 23 ist ein Heizer 63 vorgesehen, der von den umliegenden Festelektrolytfolien 22, 23 durch eine Heizerisolation 64 elektrisch isoliert ist. Der Heizer 63 und die Heizerisolation 64 werden seitlich von einem Heizerdichtrahmen 62 umgeben.

Das außerhalb des Sensorelements 10 befindliche Messgas kann über die Gaszutrittsöffnung 59 und über die innere Mantelfläche 52 der Diffusionsbarriere 41 in den Messgasraum 42 und damit zu der zweiten und der dritten Elektrode 32, 33 gelangen.

Die erste und die zweite Elektrode 31, 32 sowie der zwischen der ersten und der zweiten Elektrode 31, 32 angeordnete Festelektrolyt 21 bilden eine elektrochemische Pumpzelle, durch die Sauerstoff in den oder aus dem Messgasraum 42 gepumpt wird. Der Sauerstoffpartialdruck wird bestimmt durch eine elektrochemische Nernstzelle, die durch die dritte und die vierte Elektrode 33, 34 und den zwischen der dritten und der vierten Elektrode 33, 34 liegenden Festelektrolyten 22 gebildet wird. Anhand des Signals der Nernstzelle wird durch ein außerhalb des Sensorelement angeordnetes Steuergerät die an die Pumpzelle angelegte Spannung derart gesteuert, dass im Messgasraum 42 ein Sauerstoffpartialdruck von Lambda = 1 vorliegt. Der Sauerstoffpartialdruck des Messgases lässt sich aus der Größe des Pumpstroms der Pumpzelle ermitteln.

Die an der Pumpzelle anliegende Spannung wird so hoch gewählt, dass der gesamte im Messgasraum 42 vorhandene Sauerstoff abgepumpt wird. Damit wird der Pumpstrom durch die durch die Diffusionsbarriere 41 strömende Sauerstoffmenge begrenzt. Der hierbei fließende Pumpstrom bilden den sogenannte Grenzstrom.

Durch fertigungsbedingte (beispielsweise geometrische) Schwankungen bei der Diffusionsbarriere 41 kann sich beispielsweise die Diffusionsstrecke innerhalb der Diffusionsbarriere 41 oder die Höhe der Diffusionsbarriere 41 verändert. Bei ansonsten gleichen Bedingungen schwankt damit der Sauerstoffstrom durch die Diffusionsbarriere und damit der Grenzstrom; beispielsweise wird bei einer Verlängerung der Diffusionsstrecke der Diffusionsstrom und damit der Grenzstrom verringert. Dies hat letztlich eine Verfälschung des Messergebnisses zur Folge. Daher wird die Diffusionsbarriere 41 erfindungsgemäß auf einen einheitlichen Sauerstoffstrom durch die Diffusionsbarriere bei einheitlichen äußeren Bedingungen eingestellt (Einstellung des Diffusionswiderstandes auf einen vorgegebenen Sollwert für den Grenzstrom).

Das gesinterte Sensorelement 10 wird hierzu durch den Heizer 63 auf Betriebstemperatur beheizt (beispielsweise 750 Grad Celsius) und einem Messgas mit einer definierten Sauerstoffkonzentration (beispielsweise Umgebungsluft) ausgesetzt. Der in den Messgasraum 42 strömende Sauerstoff wird über die Pumpzelle (von der zweiten Elektrode 32 zur ersten Elektrode 31) nach außen gepumpt und der entsprechende Grenzstrom gemessen. Gleichzeitig wird am Sensorelement 10 Material abgetragen und damit der durch die Diffusionsbarriere 41 fließende Sauerstoffstrom beeinflusst. Der Materialabtrag wird solange fortgesetzt, bis ein Sollwert für den Grenzstrom, der einem Sollwert für den durch die Diffusionsbarriere 41 fließende Sauerstoffstrom entspricht, erreicht ist. Die Diffusionsbarriere 41 ist so gestaltet, dass der Diffusionsstrom vor dem Materialabtrag unter Berücksichtigung der zu erwartenden fertigungsbedingten Schwankungen kleiner als der Sollwert für den Grenzstrom ist, so dass durch den Materialabtrag die Diffusionsstrecke verkleinert und damit der Diffusionsstrom vergrößert werden kann, bis der Sollwert erreicht ist.

Hierzu ist bei dem ersten Ausführungsbeispiel gemäß den Figuren 1 und 2 vorgesehen, für die Gaszutrittsöffnung 59 einen größeren Durchmesser zu wählen als für den Innendurchmesser der Diffusionsbarriere 41. Damit kann die Diffusionsbarriere 41 mit einem Laser durch die Gaszutrittsöffnung 59 abgetragen werden. Um einen definierten Gasstrom mit gleichen Diffusionsstrecken zu erreichen, soll der Sauerstoff an der inneren Mantelfläche 52 in die Diffusionsbarriere 41 eintreten. Daher ist die Diffusionsbarriere 41 auf ihrer der Messgasöffnung 59 zugewandten Seite mit einer gasundurchlässigen Abdeckschicht 44 überzogen. Durch Abtragen der Abdeckschicht 44 und der Diffusionsbarriere 41 durch einen Laser kann somit der gewünschte Diffusionswiderstand eingestellt werden. Zur Einstellung des Diffusionswiderstandes wird also durch den Laser eine Öffnung sowohl in die Diffusionsbarriere 41 als auch in die Abdeckschicht 44 eingebracht werden, so dass die Innendurchmesser d₄ und d₂ von Abdeckschicht 45 und Diffusionsbarriere 41 ungefähr gleich sind.

Das erste Ausführungsbeispiel gemäß den Figuren 1 und 2 weist folgende Abmessungen auf:
d₁ =1,0 mm
d₂ = 0,4 mm
d₃ = 2,0 mm
d₄ = 0,4 mm

Es ist denkbar, dass die innere Öffnung der Diffusionsbarriere 41 (Mantelfläche 52) nicht zylindrisch geformt ist, da beispielsweise die Diffusionsbarriere 41 auf der der zweiten Festelektrolytfolie 22 zugewandten Seite weniger stark abgetragen werden. In diesem Fall entspricht der Innenradius der Abdeckschicht 44 dem Innenradius der Diffusionsbarriere 41 zumindest in dem direkt an die Abdeckschicht 44 angrenzenden Bereich der Diffusionsbarriere 41.

Die Abdeckschicht 44 kann sich auch in den Bereich zwischen der Diffusionsbarriere 41 und der ersten Festelektrolytfolie 21 (außerhalb der Gaszutrittsöffnung) erstrecken.

Bei den in den weiteren Figuren dargestellten Ausführungsbeispielen sind einander entsprechende Elemente mit gleichen Bezugszeichen gekennzeichnet

In Figur 3 und Figur 4 ist ein zweites Ausführungsbeispiel der Erfindung dargestellt, das sich vom ersten Ausführungsbeispiel durch die Gestaltung der Abdeckschicht 44 unterscheidet. Die Abdeckschicht 44 weist beim zweiten Ausführungsbeispiel einen Innenradius d₄ auf, der größer als der Innenradius d₂ der Diffusionsbarriere 41 ist. Zum Abgleich der Diffusionsbarriere genügt es, die Abdeckschicht 44 abzutragen, so dass die Abdeckschicht 44 mittig zur Diffusionsbarriere 41 eine Öffnung 54 aufweist. Durch die bezüglich der Diffusionsbarriere 41 mittige Öffnung 54 der Abdeckschicht 44 sind weitgehend ähnliche Diffusionsstrecken zu den Elektroden 32, 33 realisiert. Bei einer alternativen Ausführungsform (nicht dargestellt) ist die Diffusionsbarriere 41 zylinderförmig, weist also keine Öffnung 52 auf.

Das zweite Ausführungsbeispiel gemäß den Figuren 3 und 4 weist folgende Abmessungen auf:
d₁ = 1,0 mm
d₂ = 0,3 mm
d₃ = 2,0 mm
d₄ = 0,5 mm

In Figur 3a ist eine weitere Ausführungsform der Erfindung dargestellt, bei der der Innendurchmesser d₄ der Abdeckschicht 44 kleiner ist als der Innendurchmesser d₂ der Diffusionsbarriere 41, so dass die Abdeckschicht 44 sich über die Öffnung der Diffusionsbarriere 41 erstreckt. Hierzu ist in die Öffnung der Diffusionsbarriere eine Hohlraumpaste vorzusehen, die sich beim Sintern rückstandsfrei verflüchtigt. Die Schichthöhe der Abdeckschicht 44 und der Diffusionsbarriere 41 sind bei dieser Ausführungsform gleich, um eine ausreichende Stabilität der Abdeckschicht zu gewährleisten. Die Schichthöhe der Abdeckschicht liegt bei ungefähr 100 µm

Die Ausführungsform gemäß Figur 3a weist folgende Abmessungen auf:
d₁ = 1,0 mm
d₂ = 0,5 mm
d₃ = 2,0 mm
d₄ = 0,3 mm

Bei dem Ausführungsbeispiel gemäß Figur 5 ist zwischen der Abdeckschicht 44 und der ersten Festelektrolytfolie 21 eine weitere hohlzylinderförmige Diffusionsbarriere 41 a mit einem Innenradius d₅ vorgesehen. Der in den Messgasraum 42 fließende Sauerstoffstrom teilt sich damit auf in einen Anteil, der durch die weitere Diffusionsbarriere 41 a strömt, und in einen Anteil, der durch die Öffnung 54 der Abdeckschicht 44 und durch die Diffusionsbarriere 41 strömt. Um die Abgleichgenauigkeit zu vergrößern, ist die Diffusionsbarriere 41 und die weitere Diffusionsbarriere 41 a so gestaltet, dass der Sauerstoffstrom durch die weitere Diffusionsbarriere 41 a größer ist als der Sauerstoffstrom durch die Diffusionsbarriere 41. Vorzugsweise beträgt der Anteil des Sauerstoffstroms durch die weitere Diffusionsbarriere 41a 70 bis 80 Prozent und der Anteil des Sauerstoffstroms durch die Diffusionsbarriere 41 20 bis 30 Prozent des Gesamtsauerstoffstroms.

Der Innendurchmesser der weiteren Diffusionsbarriere 41a ist gleich oder größer als der Innendurchmesser der Gaszutrittsöffnung 59. Damit hat der Abtrag der Abdeckschicht 44 und gegebenenfalls der Diffusionsbarriere 41 keinen Einfluss auf die durch die weitere Diffusionsbarriere 41a strömende Sauerstoffmenge. Die Außendurchmesser der Diffusionsbarriere 41, der Abdeckschicht 44 und der weiteren Diffusionsbarriere 41 a sind ungefähr gleich. Bei einer alternativen Ausführungsform (nicht dargestellt) erstreckt sich die Abdeckschicht nur bis zur inneren Mantelfläche 55 der weiteren Diffusionsbarriere 41a.

Durch die Figuren 6a und 6b wird ein Verfahren zur Einstellung des Diffusionswiderstandes dargestellt, bei dem auf eine Abdeckschicht verzichtet wird und bei dem die Gaszutrittsöffnung 59 zumindest bereichsweise mit der Diffusionsbarriere 41 gefüllt wird. Nach einem Sinterprozess wird die Diffusionsbarriere 41 unter ständigem Messen des Grenzstroms durch einen Laser 81 abgetragen, bis der Sollwert für den Grenzstrom erreicht ist.

Bei den Verfahren zum Einstellen des Diffusionswiderstandes für die Sensorelemente gemäß den Figuren 1 bis 6b wird allgemein ein Laserstrahl 81 mittels einer Vorrichtung 80 zum Erzeugen eines Laserstrahls 81 auf die Abdeckschicht 44 und/oder die Diffusionsbarriere 41 des gesinterten Sensorelements 10 durch die Gaszutrittsöffnung 59 in der ersten Festelektrolytfolie 21 gerichtet (siehe Figuren 6a und 6b). Der Materialabtrag wird entsprechend dem oben beschriebenen Verfahren so lange fortgesetzt, bis der gemessene Grenzstrom dem vorgegebenen Sollwert entspricht. Durch den Laserabtrag der Diffusionsbarriere 41 und/oder der Abdeckschicht 44 entsteht ein Abbrand. Zum Entfernen des Abbrands ist eine Injektionsdüse 83 vorgesehen, durch die ein Luftstrom 82 auf die Diffusionsbarriere 41 und die Abdeckschicht 44 gerichtet wird (Spülgas). Der Luftstrom, dessen Sauerstoffanteil dem Sauerstoffanteil des das Sensorelement umgebenden Messgases entspricht, wird durch eine entsprechende Heizvorrichtung in der Injektionsdüse 83 auf die Betriebstemperatur des Sensorelements, beispielsweise auf eine Temperatur von 750 Grad Celsius, erhitzt.

In den beschriebenen Ausführungsbeispielen weisen Diffusionsbarriere, Messgasraum und Gaszutrittsöffnung eine zylindrische Geometrie auf. Die Erfindung lässt sich auch auf Sensorelemente übertragen, bei denen die Diffusion in den Messgasraum linear erfolgt. Hierzu weist das Sensorelement einen länglichen Kanal mit weitgehend konstanter Breite und Höhe auf, in dem die Diffusionsbarriere und der Messgasraum mit den Elektroden angeordnet ist (nicht dargestellt). In der ersten Festelektrolytfolie ist eine beispielsweise spaltförmige Gaszutrittsöffnung vorgesehen. Das Messgas kann durch die Gaszutrittsöffnung und durch die Diffusionsbarriere in den Messgasraum zu den Elektroden gelangen. Die Diffusionsrichtung des Messgases ist dabei im wesentlichen parallel zur Längsachse des Sensorelements. Auf der Diffusionsbarriere ist die Abdeckschicht vorgesehen, die durch die Gaszutrittsöffnung hindurch mit einem Laser bearbeitet werden kann. Durch Abtragen der Abdeckschicht und/oder der Diffusionsbarriere wird der Diffusionswiderstand eingestellt.

## Patentansprüche

1. Sensorelement (10) zum Nachweis einer physikalischen Eigenschaft eines Messgases, mit einer ersten Festelektrolytfolie (21) und einer zweiten Festelektrolytfolie (22) und mit einer in einer Schichtebene zwischen der ersten und der zweiten Festelektrolytfolie (21, 22) angeordneten Diffusionsbarriere (41), **dadurch gekennzeichnet, dass** auf der Diffusionsbarriere (41) bereichsweise eine gasundurchlässige Abdeckschicht (44) vorgesehen ist oder eine Abdeckschicht (44) vorgesehen ist, bei der die Menge des durch die Abdeckschicht (44) strömenden Messgases höchstens 10 Prozent der Menge des insgesamt durch die Diffusionsbarriere (41) strömenden Messgases entspricht, so dass in den Bereichen, in denen die Abdeckschicht (44) auf der Diffusionsbarriere (44) vorgesehen ist, die Diffusion des Messgases in die oder aus der Diffusionsbarriere (41) zumindest weitgehend verhindert wird.

2. Sensorelement nach Anspruch 1, **dadurch gekennzeichnet, dass** die Abdeckschicht (44) in einer Schichtebene zwischen der ersten Festelektrolytfolie (21) und der Diffusionsbarriere (41) vorgesehen ist.

3. Sensorelement nach Anspruch 1 oder 2, **dadurch gekennzeichnet, dass** das Sensorelement (10) eine Gaszutrittsöffnung (59) aufweist, und dass das Messgas durch die Gaszutrittsöffnung (59) und die Diffusionsbarriere (41) zu einer innerhalb des Sensorelements (10) angeordneten Elektrode (32, 33) gelangen kann, wobei die Abdeckschicht (44) auf der der Gaszutrittsöffnung (59) zugewandten Seite der Diffusionsbarriere (41) vorgesehen ist.

4. Sensorelement nach einem der vorhergehenden Ansprüche, **dadurch gekennzeichnet, dass** die Abdeckschicht (44) zumindest bereichsweise direkt dem Messgas ausgesetzt ist, und dass die Abdeckschicht (44) eine Aussparung (54) aufweist, durch die das Messgas oder eine Komponente des Messgases über die Diffusionsbarriere (41) zu einer Elektrode (32, 33) gelangen kann.

5. Sensorelement nach Anspruch 4, **dadurch gekennzeichnet, dass** die Aussparung (54) der Abdeckschicht (44) bezüglich der Diffusionsbarriere (41) mittig angeordnet ist.

6. Sensorelement nach einem der vorhergehenden Ansprüche, **dadurch gekennzeichnet, dass** die von der Abdeckschicht (44) bedeckte Fläche der Diffusionsbarriere (41) parallel zu einer Schichtebene des Sensorelements (10) liegt.

7. Sensorelement nach einem der vorhergehenden Ansprüche, **dadurch gekennzeichnet, dass** eine in die erste Festelektrolytfolie (21) eingebrachte Gaszutrittsöffnung (59) einen Innendurchmesser d₁ aufweist, dass die Diffusionsbarriere (41) zylinderförmig oder hohlzylinderförmig gestaltet ist, wobei d₂ den Innendurchmesser der hohlzylinderförmigen Diffusionsbarriere (41) und d₃ den Außendurchmesser der zylinderförmigen oder hohlzylinderförmigen Diffusionsbarriere (41) bezeichnet, und dass die Abdeckschicht (44) eine kreisförmige Aussparung mit einem Durchmesser d₄ aufweist.

8. Sensorelement nach Anspruch 7, **dadurch gekennzeichnet, dass** d₄ < d₁ < d₃.

9. Sensorelement nach Anspruch 7 oder 8, **dadurch gekennzeichnet, dass** d₁ im Bereich von 0,6 mm bis 1,8 mm liegt und/oder dass d₂ im Bereich von 0,2 mm bis 0,6 mm liegt und/oder dass d₃ im Bereich von 1,8 mm bis 3,0 mm liegt und/oder dass d₄ im Bereich von 0,2 mm bis 0,6 mm liegt.

10. Sensorelement nach einem der Ansprüche 7 bis 9, **dadurch gekennzeichnet, dass** d₂ ≤ d₄.

11. Sensorelement nach einem der Ansprüche 7 bis 9, **dadurch gekennzeichnet, dass** d₄ ≤ d₂ < d₁.

12. Sensorelement nach einem der Ansprüche 7 bis 11, **dadurch gekennzeichnet, dass** die Öffnungen mit den Durchmessern d₁, d₂, d₃ und d₄ zueinander konzentrisch angeordnet sind.

13. Sensorelement nach einem der vorhergehenden Ansprüche, **dadurch gekennzeichnet, dass** zwischen der Abdeckschicht (44) und der ersten Festelektrolytfolie (21) eine weitere Diffusionsbarriere (41a) angeordnet ist.

14. Sensorelement nach Anspruch 13, soweit auf Anspruch 2 rückbezogen, **dadurch gekennzeichnet, dass** das Messgas oder eine Komponente des Messgases durch die weitere Diffusionsbarriere (41a) zur Elektrode (32, 33) gelangen kann, ohne durch die Aussparung (54) der Abdeckschicht (44) zu treten.

15. Sensorelement nach Anspruch 13 oder 14 **dadurch gekennzeichnet, dass** die weitere Diffusionsbarriere (41 a) ringförmig gestaltet ist und einen Innendurchmesser d₅ aufweist, wobei d₁ ≤ d₅ und/oder d₄ ≤ d₅.

16. Sensorelement nach einem der Ansprüche 13 bis 15, **dadurch gekennzeichnet, dass** der Außendurchmesser der Abdeckschicht (44) größer als der Innendurchmesser d₅ ist oder dem Innendurchmesser d₅ entspricht.

17. Verfahren zur Herstellung eines Sensorelements (10) nach einem des vorhesgehenden Ansprüche, wobei das Sensorelement (10) eine Diffusionsbarriere (41) umfasst, die zwischen einer ersten und einer zweiten Festelektrolytfolie (21, 22) angeordnet wird, **dadurch gekennzeichnet, dass** auf eine Seite der Diffusionsbarriere (41), die einem außerhalb des Sensorelements (10) befindlichen Messgas zugewandt ist, eine Abdeckschicht (44) aufgebracht wird, die nach einem Sinterprozess gasundurchlässig oder zumindest weitgehend gasundurchlässig ist so dass die Menge des durch die Abdeckschicht (44) Strömenden Messgases höchsters 10 Prozent der Menge des insgesamt durch die Diffusionsbarriere (41) Strömenden Messgases entspricht, und dass die Abdeckschicht (44) zur Einstellung des Diffusionswiderstandes der Diffusionsbarriere (41) abgetragen wird.

18. Verfahren nach Anspruch 17, **dadurch gekennzeichnet, dass** die Abdeckschicht (44) nach einem Sinterprozess durch einen Laser (81) abgetragen wird.

19. Verfahren nach Anspruch 18, **dadurch gekennzeichnet, dass** durch den Laser (81) auch ein Bereich der Diffusionsbarriere (41) abgetragen wird.

20. Verfahren nach einem der Ansprüche 17 bis 19, **dadurch gekennzeichnet, dass** in die erste Festelektrolytfolie (21) eine Gaszutrittsöffnung (59) eingebracht wird, und dass der Laser (81) die Abdeckschicht (44) durch die Gaszutrittsöffnung (59) hindurch abträgt.

21. Verfahren nach einem der Ansprüche 17 bis 20, **dadurch gekennzeichnet, dass** das Sensorelement (10) eine elektrochemische Zelle umfasst, dass das außerhalb des Sensorelements (10) befindliche Messgas durch die Diffusionsbarriere (41) zu einer Elektrode (32, 33) der elektrochemischen Zelle gelangen kann, und dass während des Abtrags und/oder vor oder nach dem Abtrag oder einer Abtragphase ein Diffusionsgrenzstrom gemessen wird, indem das Sensorelement (10) einem Messgas ausgesetzt wird und an die elektrochemische Zelle eine Spannung angelegt wird, wobei die Spannung so hoch ist, dass die elektrochemische Zelle im Grenzstrombereich betrieben wird, und indem der aufgrund der angelegten Spannung durch die elektrochemische Zelle fließende Grenzstrom gemessen wird, wobei der Abtrag fortgesetzt wird, bis ein Sollwert für den Grenzstrom erreicht wird.

22. Verfahren nach einem der Ansprüche 17 bis 21, **dadurch gekennzeichnet, dass** während des Abtrags der Diffusionsbarriere (41) durch einen Laser (81) der durch den Abtrag entstehende Abbrand mittels eines durch eine Injektionsdüse (83) auf die Diffusionsbarriere (41) gelenkten Luftstroms (82) wegtransportiert wird.

23. Verfahren nach Anspruch 22, **dadurch gekennzeichnet, dass** der Luftstrom einen der Atmosphärenluft entsprechenden Sauerstoffpartialdruck aufweist, und dass der Luftstrom auf ungefähr die Betriebstemperatur des Sensorelements (10) erhitzt wird, insbesondere auf über 500 Grad Celsius, vorzugsweise auf 750 Grad Celsius.

## Claims

1. Sensor element (10) for detecting a physical property of a test gas, comprising a first solid-electrolyte film (21) and a second solid-electrolyte film (22) and comprising a diffusion barrier (41) arranged in a layer plane between the first and second solid-electrolyte films (21, 22), **characterized in that** a gas-impermeable covering layer (44) is provided in certain regions on the diffusion barrier (41) or a covering layer (44) is provided such that the amount of the test gas flowing through the covering layer (44) corresponds at most to 10 percent of the amount of the test gas flowing altogether through the diffusion barrier (41), so that the diffusion of the test gas into or out of the diffusion barrier (41) is at least largely prevented in the regions in which the covering layer (44) is provided on the diffusion barrier (41).

2. Sensor element according to Claim 1, **characterized in that** the covering layer (44) is provided in a layer plane between the first solid-electrolyte film (21) and the diffusion barrier (41).

3. Sensor element according to Claim 1 or 2,
**characterized in that** the sensor element (10) has a gas access opening (59), and **in that** the test gas can pass through the gas access opening (59) and the diffusion barrier (41) to an electrode (32, 33) arranged inside the sensor element (10), the covering layer (44) being provided on the side of the diffusion barrier (41) that is facing the gas access opening (59).

4. Sensor element according to one of the preceding claims, **characterized in that** the covering layer (44) is exposed directly to the test gas, at least in certain regions, and **in that** the covering layer (44) has a clearance (54), through which the test gas or a component of the test gas can pass via the diffusion barrier (41) to an electrode (32, 33).

5. Sensor element according to Claim 4, **characterized in that** the clearance (54) in the covering layer (44) is arranged centrally with respect to the diffusion barrier (41).

6. Sensor element according to one of the preceding claims, **characterized in that** the area of the diffusion barrier (41) that is covered by the covering layer (44) lies parallel to a layer plane of the sensor element (10).

7. Sensor element according to one of the preceding claims, **characterized in that** a gas access opening (59) introduced into the first solid-electrolyte film (21) has an inside diameter d₁, **in that** the diffusion barrier (41) is shaped in the form of a cylinder or hollow cylinder, where d₂ denotes the inside diameter of the hollow-cylindrical diffusion barrier (41) and d₃ denotes the outside diameter of the cylindrical or hollow-cylindrical diffusion barrier (41), and **in that** the covering layer (44) has a circular clearance with a diameter d₄.

8. Sensor element according to Claim 7, **characterized in that** d₄ < d₁ < d₃.

9. Sensor element according to Claim 7 or 8,
**characterized in that** d₁ lies in the range from 0.6 mm to 1.8 mm and/or **in that** d₂ lies in the range from 0.2 mm to 0.6 mm and/or **in that** d₃ lies in the range from 1.8 to 3.0 mm and/or **in that** d₄ lies in the range from 0.2 mm to 0.6 mm.

10. Sensor element according to one of Claims 7 to 9, **characterized in that** d₂ ≤ d₄.

11. Sensor element according to one of Claims 7 to 9, **characterized in that** d₄ ≤ d₂ <d₁.

12. Sensor element according to one of Claims 7 to 11, **characterized in that** the openings with the diameters d₁, d₂, d₃ and d₄ are arranged concentrically in relation to one another.

13. Sensor element according to one of the preceding claims, **characterized in that** a further diffusion barrier (41a) is arranged between the covering layer (44) and the first solid-electrolyte film (21).

14. Sensor element according to Claim 13, to the extent to which it refers back to Claim 2, **characterized in that** the test gas or a component of the test gas can pass through the further diffusion barrier (41a) to the electrode (32, 33) without going through the clearance (54) in the covering layer (44).

15. Sensor element according to Claim 13 or 14, **characterized in that** the further diffusion barrier (41a) is shaped in the form of a ring and has an inside diameter d₅, where d₁ ≤ d₅ and/or d₄ ≤ d₅.

16. Sensor element according to one of Claims 13 to 15, **characterized in that** the outside diameter of the covering layer (44) is greater than the inside diameter d₅ or corresponds to the inside diameter d₅.

17. Method for producing a sensor element (10) according to one of the preceding claims, the sensor element (10) comprising a diffusion barrier (41), which is arranged between a first and a second solid-electrolyte film (21, 22), **characterized in that** a covering layer (44) is applied to a side of the diffusion barrier (41) that is facing a test gas located outside the sensor element (10), which covering layer is gas-impermeable or at least largely gas-impermeable after a sintering process, so that the amount of the test gas flowing through the covering layer (44) corresponds at most to 10 percent of the amount of the test gas flowing altogether through the diffusion barrier (41), and **in that** the covering layer (44) is removed to set the diffusion resistance of the diffusion barrier (41).

18. Method according to Claim 17, **characterized in that** the covering layer (44) is removed by a laser (81) after a sintering process.

19. Method according to Claim 18, **characterized in that** a region of the diffusion barrier (41) is also removed by the laser (81).

20. Method according to one of Claims 17 to 19,
**characterized in that** a gas access opening (59) is introduced into the first solid-electrolyte film (21), and **in that** the laser (81) removes the covering layer (44) through the gas access opening (59).

21. Method according to one of Claims 17 to 20, **characterized in that** the sensor element (10) comprises an electrochemical cell, **in that** the test gas located outside the sensor element (10) can pass through the diffusion barrier (41) to an electrode (32, 33) of the electrochemical cell, and **in that**, during the removal and/or before or after the removal or a removal phase, a limiting diffusion current is measured by exposing the sensor element (10) to a test gas and applying a voltage to the electrochemical cell, the voltage being of such a level that the electrochemical cell is operated in the limiting current range, and by the limiting current that flows through the electrochemical cell as a result of the applied voltage being measured, the removal being continued until a setpoint value for the limiting current is reached.

22. Method according to one of Claims 17 to 21, **characterized in that**, during the removal of the diffusion barrier (41) by a laser (81), the residue produced by the removal is transported away by means of an air stream (82) directed onto the diffusion barrier (41) through an injection nozzle (83).

23. Method according to Claim 22, **characterized in that** the air stream has a partial oxygen pressure corresponding to the atmospheric air, and **in that** the air stream is heated to approximately the operating temperature of the sensor element (10), in particular to over 500 degrees Celsius, preferably to 750 degrees Celsius.

## Revendications

1. Elément de détection (10) destiné à détecter une propriété physique d'un gaz à mesurer et présentant :
une première feuille (21) en électrolyte solide et une deuxième feuille (22) en électrolyte solide ainsi qu'une barrière de diffusion (41) disposée dans un plan de couche situé entre la première et la deuxième feuille (21, 22) d'électrolyte solide,
**caractérisé en ce que**
une couche de recouvrement (44) imperméable au gaz est prévue sur certaines parties de la barrière de diffusion (41) ou une couche de recouvrement (44) dont la quantité du gaz à mesurer qui traverse la couche de recouvrement (44) correspond au plus à 10 pourcent de la quantité du gaz à mesurer qui traverse globalement la barrière de diffusion (41) est prévue,
de sorte que dans les parties dans lesquelles la couche de recouvrement (44) est prévue sur la barrière de diffusion (41), le gaz à mesurer est au moins largement empêché de diffuser dans la barrière de diffusion (41) ou hors de celle-ci.

2. Elément de détection selon la revendication 1, **caractérisé en ce que** la couche de recouvrement (44) est prévue dans un plan de couche situé entre la première feuille (21) en électrolyte solide et la barrière de diffusion (41).

3. Elément de détection selon les revendications 1 ou 2, **caractérisé en ce que** l'élément de détection (10) présente une ouverture (59) d'amenée de gaz et **en ce que** le gaz à mesurer peut passer par l'ouverture (59) d'amenée de gaz et traverser la barrière de diffusion (41) pour aboutir à une électrode (32, 33) disposée à l'intérieur de l'élément de détection (10), la couche de recouvrement (44) étant prévue sur le côté de la barrière de diffusion (41) non tourné vers l'ouverture (59) d'amenée de gaz.

4. Elément de détection selon l'une des revendications précédentes, **caractérisé en ce qu'**au moins certaines parties de la couche de recouvrement (44) sont exposées directement au gaz à mesurer et **en ce que** la couche de recouvrement (44) présente une découpe (54) par laquelle le gaz à mesurer ou un composant du gaz à mesurer peuvent aboutir à une électrode (32, 33) en traversant la barrière de diffusion (41).

5. Elément de détection selon la revendication 4, **caractérisé en ce que** la découpe (54) ménagée dans la couche de recouvrement (44) est disposée au milieu de la barrière de diffusion (41).

6. Elément de détection selon l'une des revendications précédentes, **caractérisé en ce que** la surface de la barrière de diffusion (41) recouverte par la couche de recouvrement (44) est parallèle à un plan de couche de l'élément de détection (10).

7. Elément de détection selon l'une des revendications précédentes, **caractérisé en ce qu'**une ouverture (59) d'amenée de gaz ménagée dans la première feuille (21) en électrolyte solide présente un diamètre intérieur d₁, **en ce que** la barrière de diffusion (41) a la forme d'un cylindre ou d'un cylindre creux, d₂ désignant le diamètre intérieur de la barrière de diffusion (41) en forme de cylindre creux et d₃ le diamètre extérieur de la barrière de diffusion (41) en forme de cylindre ou de cylindre creux, et **en ce que** la couche de recouvrement (44) présente une découpe circulaire d'un diamètre d₄.

8. Elément de détection selon la revendication 7, **caractérisé en ce que** d₄ < d₁ < d₃.

9. Elément de détection selon les revendications 7 ou 8, **caractérisé en ce que** d₁ est compris dans la plage de 0,6 mm à 1,8 mm, **en ce que** d₂ est compris dans la plage de 0,2 mm à 0,6 mm, **en ce que** d₃ est situé dans la plage de 1,8 mm à 3,0 mm et/ou **en ce que** d₄ est compris dans la plage de 0,2 mm à 0,6 mm.

10. Elément de détection selon l'une des revendications 7 à 9, **caractérisé en ce que** d₂ ≤ d₄.

11. Elément de détection selon l'une des revendications 7 à 9, **caractérisé en ce que** d₄ ≤ d₂ < d₁.

12. Elément de détection selon l'une des revendications 7 à 11, **caractérisé en ce que** les ouvertures de diamètres d₁, d₂, d₃ et d₄ sont disposées concentriquement les unes par rapport aux autres.

13. Elément de détection selon l'une des revendications précédentes, **caractérisé en ce qu'**une autre barrière de diffusion (41a) est disposée entre la couche de recouvrement (44) et la première feuille (21) en électrolyte solide.

14. Elément de détection selon la revendication 13 dans la mesure où elle se réfère à la revendication 2, **caractérisé en ce que** le gaz à mesurer ou un composant du gaz à mesurer peuvent aboutir à l'électrode (32, 33) en traversant l'autre barrière de diffusion (41a) sans traverser la découpe (54) ménagée dans la couche de recouvrement (44).

15. Elément de détection selon les revendications 13 ou 14, **caractérisé en ce que** l'autre barrière de diffusion (41a) a la forme d'un anneau et présente un diamètre intérieur d₅, avec d₁ ≤ d₅ et/ou d₄ ≤ d₅.

16. Elément de détection selon l'une des revendications 13 à 15, **caractérisé en ce que** le diamètre extérieur de la couche de recouvrement (44) est plus grand que le diamètre intérieur d₅ ou correspond au diamètre intérieur d₅.

17. Procédé de fabrication d'un élément de détection (10) selon l'une des revendications précédentes, dans lequel l'élément de détection (10) comporte une barrière de diffusion (41) disposée entre une première et une deuxième feuille (21, 22) en électrolyte solide,
**caractérisé en ce que**
sur le côté de la barrière de diffusion (41) tourné vers le gaz à mesurer présent à l'extérieur de l'élément de détection (10), une couche de recouvrement (44) rendue imperméable au gaz ou au moins largement imperméable au gaz par une opération de frittage est appliquée de telle sorte que la quantité de gaz à mesurer qui traverse la couche de recouvrement (44) correspond au plus à 10 pourcent de la quantité totale du gaz à mesurer qui traverse la barrière de diffusion (41) et
**en ce que** la couche de recouvrement (44) est appliquée pour ajuster la résistance à la diffusion de la barrière de diffusion (41).

18. Procédé selon la revendication 17, **caractérisé en ce que** la couche de recouvrement (44) est enlevée par un laser (81) après une opération de frittage.

19. Procédé selon la revendication 18, **caractérisé en ce que** le laser (81) enlève également une partie de la barrière de diffusion (41).

20. Procédé selon l'une des revendications 17 à 19, **caractérisé en ce qu'**une ouverture (59) d'amenée de gaz est ménagée dans la première feuille (21) en électrolyte solide et **en ce que** le laser (81) enlève la couche de recouvrement (44) à travers l'ouverture (59) d'amenée de gaz.

21. Procédé selon l'une des revendications 17 à 20, **caractérisé en ce que** l'élément de détection (10) comprend une cellule électrochimique, **en ce que** le gaz à mesurer situé à l'extérieur de l'élément de détection (10) peut aboutir à une électrode (32, 33) de la cellule électrochimique en traversant la barrière de diffusion (41) et **en ce que** pendant l'enlèvement et/ou avant ou après l'enlèvement ou une phase d'enlèvement, le courant limite de diffusion est mesuré en exposant l'élément de détection (10) à un gaz à mesurer, en appliquant une tension sur la cellule électrochimique, la tension étant suffisamment élevée pour que la cellule électrochimique fonctionne dans la plage du courant limite, et en mesurant le courant limite qui s'écoule dans la cellule électrochimique suite à l'application de la tension, l'enlèvement étant poursuivi jusqu'à atteindre une valeur de consigne du courant limite.

22. Procédé selon l'une des revendications 17 à 21, **caractérisé en ce que** pendant l'enlèvement de la barrière de diffusion (41) par un laser (81), les résidus de combustion produits lors de l'enlèvement sont enlevés au moyen d'un écoulement d'air (82) dirigé sur la barrière de diffusion (41) par une tuyère d'injection (83).

23. Procédé selon la revendication 22, **caractérisé en ce que** la pression partielle d'oxygène de l'écoulement d'air correspond à celle de l'air atmosphérique et **en ce que** l'écoulement d'air est chauffé sensiblement à la température de fonctionnement de l'élément de détection (10), en particulier à plus de 500 degrés Celsius et de préférence à 750 degrés Celsius.
